# EUROPEAN PATENT SPECIFICATION

(11) **EP 0 441 977 B1**
(45) Date of publication and mention of the grant of the patent: **21.06.1995**
(21) Application number: 90912951.2
(22) Date of filing: 29.08.1990
(51) Int. Cl.: G05B 19/409

(54) **DISPLAY SYSTEM OF NUMERIC CONTROL APPARATUS**
ANZEIGESYSTEM FÜR EIN NUMERISCH GESTEUERTES GERÄT
SYSTEME D'AFFICHAGE POUR APPAREIL DE COMMANDE NUMERIQUE

(30) Priority: 05.09.1989 JP 230038/89
(43) Date of publication of application: 21.08.1991
(73) Proprietor: FANUC LTD., Minamitsuru-gun, Yamanashi 401-05 (JP)
(72) Inventor: FUJITA, Naoki Fanuc Mansion Harimomi 6-203, Yamanashi 401-05 (JP); MATSUMURA, Teruyuki 38-8, Matsugaya, Tokyo 192-03 (JP); MURATA, Koichi 1-3-32-504, Nikkocho, Tokyo 183 (JP)
(74) Representative: Brunner, Michael John
(86) International application number: JP9001096
(87) International publication number: WO9103777

(56) References cited:
- JP-A- 0 159 380
- JP-A-63 146 107
- PATENT ABSTRACTS OF JAPAN vol. 10, no. 147 (P-460)(2204)29 May 1986 & JP-A-61 000 811 ( MITSUBISHI DENKI K. K. ) 6 January 1986
- ZWF-ZEITSCHRIFT FüR WIRTSCHAFTLICHE FERTIGUNG UND AUTOMATISIERUNG vol. 83, no. 2, February 1988, Munchen,DE pages 68- 73;E.HOHWIELER ET AL:"Einsastz der Rundachse für die Komplettbearbeitung auf CNC-Drehmachinen"

## Description

The present invention relates to a display system for a numerical control apparatus by which a workpiece configuration contained in a machining program of the numerical control apparatus and the like is displayed, and more specifically, to a display system for a numerical control apparatus by which an enlarged workpiece configuration is displayed.

### BACKGROUND ART

A workpiece configuration contained in a machining program is displayed at a CRT screen connected to a numerical control apparatus incorporating an automatic programming, wherein a complex portion of the workpiece configuration is enlarged and displayed to enable a detailed portion thereof to be checked.

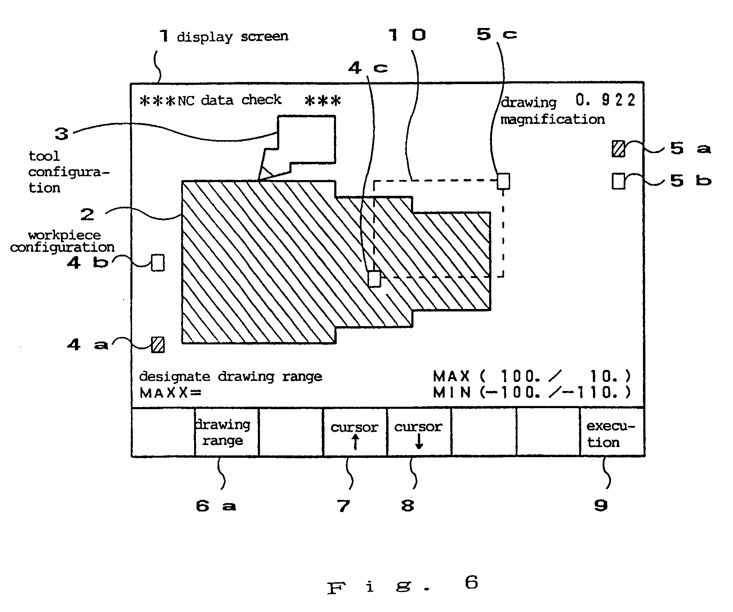

An operation for enlarging the workpiece configuration at the display screen will be described below with reference to drawings. Figure 6 shows a display screen of a conventional interactive type numerical control apparatus.

A display screen 1 displays necessary data such as a workpiece configuration 2, tool configuration 3, drawing magnification, cursors 4a, 4b, 4c, 5a, 5b and 5c, and the like, and software keys labeled with respective functions are disposed under the display screen 1.

First, a drawing range designating key 6a of the software keys is depressed and the cursors 4a and 5a are displayed at the screen, and then cursor moving keys 7 and 8 are operated to move the positions of the cursors 4a and 5a to the positions of the cursors 4b and 5b. Next, a not shown function menu key is operated to cause the cursor moving keys 7 and 8 to be converted into lateral (right and left direction) cursor moving keys to move the cursors 4b and 5b to the positions of the cursors 4c and 5c.

When an execution key 9 is depressed after the completion of the above operations, an enlargement of the portion of the display screen 1 surrounded by a dotted line 10 having the cursors 4c and 5c at the corners thereof is displayed.

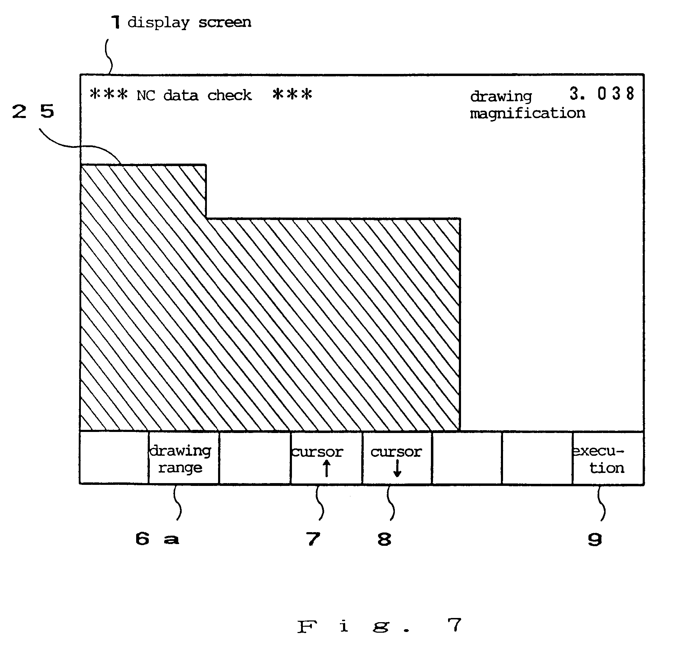

Figure 7 is a display screen showing the enlarged portion of the dotted line 10. Namely, the portion of the workpiece configuration 2 surrounded by the dotted line 10 is displayed at the display screen as an enlarged workpiece configuration 25.

Nevertheless, when a machining simulation is carried out at the enlarged display screen of Figure 7, the portion of the enlarged workpiece configuration currently being machined by the tool 3 cannot be recognized, although this could be recognized in Figure 6. More specifically, the display screen of Figure 6 enables the machining position of the tool 3 to be recognised because it displays the tool 3 at all times, but it does not display the enlarged diagram of the workpiece configuration 2, whereas the display screen of Figure 7 displays the enlarged diagram of the workpiece configuration 2, but does not enable the operator to recognise the machining position and movement of the tool 3 because the tool is outside of the enlarged portion. Display of a workpiece as well as an enlargement thereof is known from document JP-A-61-811.

Taking the above into consideration, an object of the present invention is to provide a display system for a numerical control apparatus by which the machining position of a tool can be recognised while an enlarged diagram of a workpiece configuration is displayed.

To solve the above problem, according to the present invention, there is provided a method of displaying a workpiece configuration represented by numerical control data in a machining program, the method comprising the steps of:
(a) displaying a standard screen display of the workpiece configuration on a display screen;
(b) designating a drawing range of a portion of the standard screen display including the workpiece configuration;
(c) graphically indicating the drawing range on the standard screen display; and
(d) displaying an enlarged screen display of the portion of the standard screen display designated in step (b) on the display screen simultaneously with a reduced image of the standard screen displayed in step (c), within the enlarged screen display.

A region in which the enlarged portion is displayed is preferably indicated in the standard screen displayed at the display screen showing the enlarged portion.

Since the standard screen at which the entire workpiece configuration is displayed is simultaneously displayed at the display screen at which an enlarged workpiece configuration is displayed, even if a machining simulation is carried out, the machining position of a tool and an enlarged diagram of the workpiece configuration can be simultaneously scanned. Further, since a scaled down version of the entire standard screen is displayed inside the workpiece configuration, it does not hinder the scanning of the enlarged diagram of the workpiece configuration. Further, the enlarged portion shown at the display screen can be easily recognised by indicating a region, denoting the enlarged portion, at the standard screen.

In the drawings:-
Figure 1 shows an example of a display screen based on a workpiece configuration display system as an embodiment according to the present invention;
Figure 2 shows a schematic arrangement of an interactive type numerical control apparatus as an embodiment according to the present invention;
Figure 3 shows a flowchart of the operation of the embodiment;
Figure 4 shows an example of a display screen, for explaining another embodiment according to the present invention;
Figure 5 shows a display screen at which an enlargement of a portion of Figure 4 is displayed;
Figure 6 shows a display screen of a conventional interactive type numerical control apparatus; and
Figure 7 shows a conventional display screen at which an enlargement of a portion of Figure 6 is displayed.

### BEST MODE OF CARRYING OUT THE INVENTION

An embodiment of the present invention will be described below with reference to drawings.

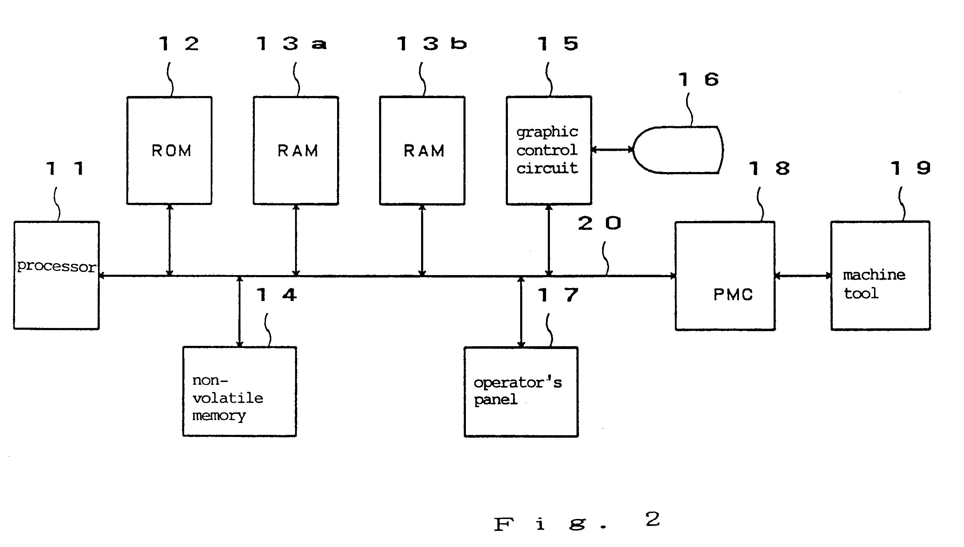

Figure 2 shows a schematic arrangement of an interactive type numerical control apparatus as an embodiment according to the present invention, wherein a processor 11 controls the entire operation of an interactive type numerical control apparatus in accordance with a system program stored in a ROM 12. The ROM 12 is composed of an EPROM or EEPROM, and the RAMs 13a and 13b are composed of a DRAM. The RAM 13a stores I/O signals and the RAM 13b stores various image data for processing an image. A non-volatile memory is composed of a CMOS which stores parameters, amounts of pitch error correction, amounts of tool correction, and the like, and these data are maintained effective even after a power supply is cut off, because the CMOS is supplied with power from a battery.

A graphic control circuit 15 converts digital signals into display signals and supplies same to a display unit 16. The display unit 16 is composed of a CRT or liquid crystal display unit at which a workpiece configuration, machining configuration, machining definition screen, the position of various axes, the state of I/O signals, parameters, and the like are displayed. An operator's panel 17 composed of a keyboard and the like is used to input various data and to operate a machine tool 19.

A programmable machine controller (PMC) 18 receives output signals through a bus 20 and processes same by a sequence program to control the machine tool 19. Further, the PMC 18 receives input signals from the machine tool, processes these signals by the sequence program, and transfers same to the processor 11 through a bus 20.

These components are interconnected through the bus 20.

Note that Figure 2 does not show components such as servo amplifiers, servo motors, spindle amplifiers, spindle motors, and the like. Further, a plurality of the processors may be used, to provide a multi-processing system.

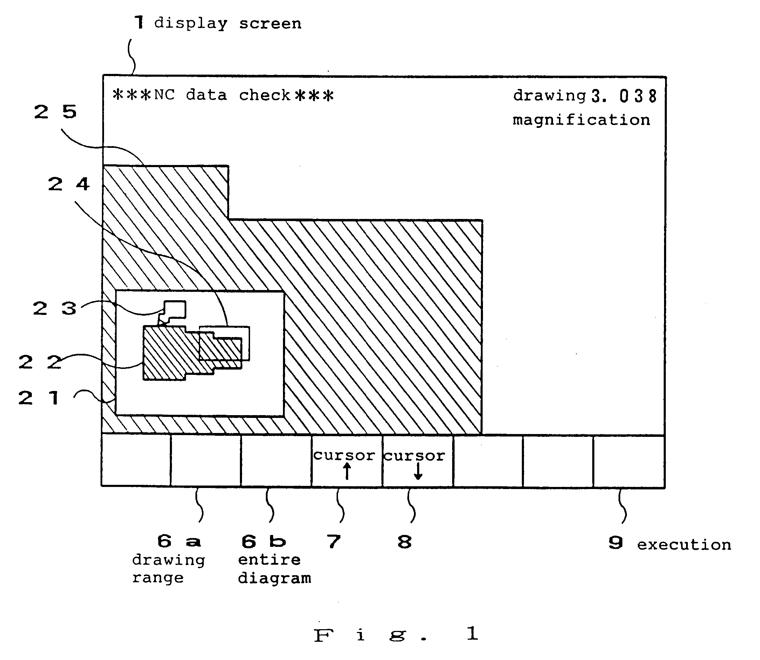

Figure 1 shows an example of a display screen based on a workpiece configuration display system as an embodiment according to the present invention. Figure 1 shows a partially enlarged diagram of the dotted line 10 of Figure 6 and corresponds to Figure 7. Figure 1 shows a window screen 21 located at a lower left side of the enlargement displayed at the screen, wherein a scaled-down workpiece configuration 22 and a scaled-down tool configuration 23 of the display screen 1 of Figure 6 are displayed.

The window screen 21 is displayed inside an enlarged display of a workpiece configuration 25. With this arrangement, the display of the window screen 21 does not prevent the recognition of the workpiece configuration in the enlargement displayed at the screen. Further, the window screen 21 displays an enlarged display region 24 at which an enlargement of the portion, which corresponds to the dotted line 10 of Figure 6, is displayed. With this arrangement, the portion of the workpiece configuration 2 displayed as the enlarged workpiece configuration 25 can be recognized immediately.

Figure 7 is converted into Figure 1 by depressing an entire diagram designating key 6b of the software keys.

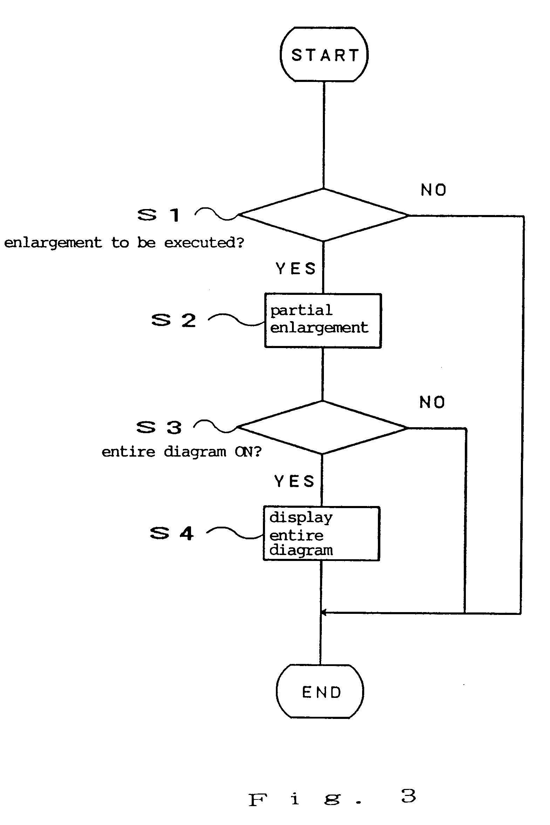

The operation of the present invention will be described below with reference to the drawings, wherein numerals prefixed with an "S" indicate the numbers of steps of the process shown in Fig. 3.
[S1] It is determined whether or not an enlargement process has been carried out. If the enlargement process has been carried out, the process goes to step 2, and if it not, the process is ended. First, a drawing range designating key 6a of the software keys is depressed to specify the portion surrounded by the dotted line having cursors 4c and 5c at the corners thereof at the display screen 1 by a cursor operation similar to the conventional cursor operation, and an execution key 9 is depressed, and thus the processor 11 determines that the enlargement process is to be carried out.
[S2] A graphic control circuit 15 enlarges the portion surrounded by the dotted line 10 of Figure 6 in accordance with a command from the processor 11.
[S3] It is determined whether or not the entire diagram designating key 6b has been depressed. If depressed, the process goes to step 4, and if not depressed, the screen of Figure 7 is displayed as is.
[S4] The window screen 21 is displayed inside the enlarged workpiece configuration 25, and further an entire diagram scaled down from the workpiece configuration 2 of Figure 6 is displayed in the window screen 21.

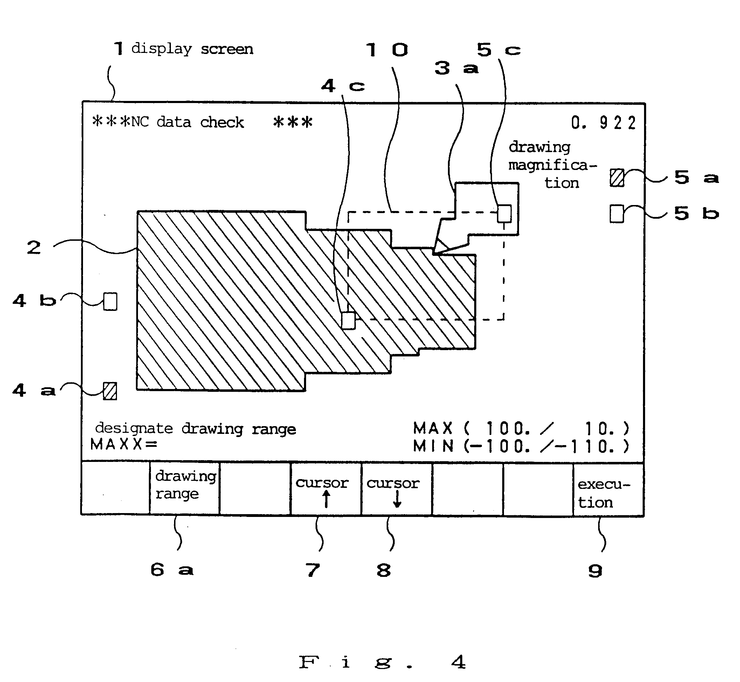

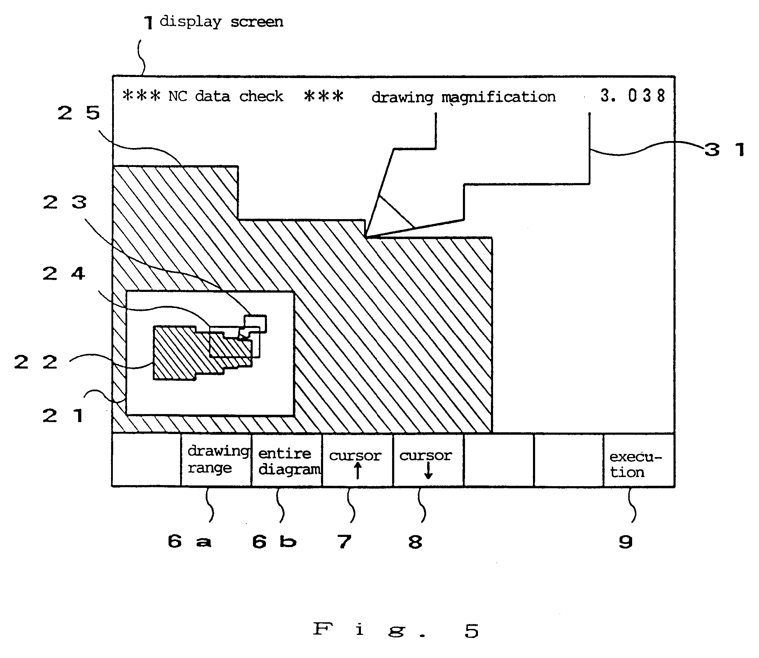

Figure 4 shows an example of a display screen, for explaining another embodiment according to the present invention, and Figure 5 shows a display screen at which an enlargement of a portion of Figure 4 is displayed. In Figures 4 and 5, the same numerals are used to designate the same components used in Figures 6 and 7, and thus a description thereof is omitted.

This embodiment will describe the case in which an enlargement of the portion whereat a tool 3a is machining a component 2 is displayed. A portion to be enlarged (dotted line 10) is designated by operating cursors as in the case of Figure 6, to carry out an enlargement process. Thereafter, when an entire diagram designating key 6b is depressed, an enlarged diagram and entire diagram are displayed simultaneously at a display screen 1, as in Figure 5. With this arrangement, the portion of the entire component currently being machined by the tool machines can be easily recognized even if a machining simulation is carried out, and further, the manner in which the machining is carried out can be precisely recognized from the enlarged diagram of the portion being machined.

As described above, according to the present invention, since a portion machined by a tool can be workpiece configuration is displayed, a machining simulation can be precisely carried out and the programming can be easily made.

## Claims

1. A method of displaying a workpiece configuration (2) represented by numerical control data in a machining program, the method comprising the steps of:
(a) displaying a standard screen display of the workpiece configuration on a display screen (1);
(b) designating a drawing range of a portion of the standard screen display including the workpiece configuration;
(c) graphically indicating the drawing range on the standard screen display; and
(d) displaying an enlarged screen display (25) of the portion of the standard screen display designated in step (b) on the display screen simultaneously with a reduced image (21) of the standard screen displayed in step (c), within the enlarged screen display.

2. A method of displaying a workpiece configuration (2) according to claim 1, wherein the reduced image (21) of said standard screen display is displayed inside the enlarged displayed workpiece configuration (25).

3. A method of displaying a workpiece configuration according to claim 1 or claim 2, wherein a region containing the display of the enlarged portion is indicated on said reduced image (21) of the standard screen display within said enlarged screen display (25).

## Patentansprüche

1. Verfahren zum Abbilden der Gestalt eines Werkstücks (2), die von numerischen Steuerdaten in einem Bearbeitungsprogramm vorgegeben ist, mit folgenden Schritten:
(a) auf einem Bildschirm (1) wird eine Standardabbildung des Werkstücks abgebildet;
(b) ein Bildbereich eines Teils der das Werkstück umschließenden Standardabbildung wird bezeichnet;
(c) der Zeichenbereich auf der Standardabbildung wird graphisch angezeigt; und
(d) eine Ausschnitts-Vergrößerung (25) des Teils der im Schritt (b) bezeichneten Standardabbildung wird auf dem Bildschirm gleichzeitig mit einer verkleinerten Abbildung (21) der Standardabbildung gemäß Schritt (c) innerhalb der Ausschnitts -Vergrößerung abgebildet.

2. Verfahren zum Abbilden eines Werkstücks nach Anspruch 1, bei dem die verkleinerte Abbildung (21) der Standardabbildung innerhalb der Werkstückausschnitts-Vergrößerung (25) abgebildet wird.

3. Verfahren zum Abbilden eines Werkstücks nach Anspruch 1 oder 2, bei dem ein die Abbildung des Ausschnitts-Vergrößerung umschließender Bereich an der verkleinerten Abbildung (21) der Standardabbildung innerhalb der Ausschnitts-Vergrößerung (25) angezeigt wird.

## Revendications

1. Un procédé d'affichage de la configuration d'une pièce d'ouvrage (2) représentée par des données de commande numérique dans un programme d'usinage, le procédé comprenant les opérations consistant à :
(a) afficher un affichage d'écran standard de la configuration de la pièce d'ouvrage sur un écran d'affichage (1) ;
(b) désigner une gamme de dessin d'une partie de l'affichage d'écran standard comprenant la configuration de la pièce d'ouvrage ;
(c) indiquer de manière graphique la gamme de dessin sur l'affichage d'écran standard ; et
(d) afficher un affichage d'écran agrandi (25) de la partie de l'affichage d'écran standard désigné dans l'opération (b) sur l'écran d'affichage en même temps qu'une image réduite (21) de l'écran standard affiché dans l'opération (c), à l'intérieur de l'affichage d'écran agrandi.

2. Un procédé d'affichage de la configuration d'une pièce d'ouvrage (2) selon la revendication 1, dans lequel l'image réduite (21) dudit affichage d'écran standard est affichée à l'intérieur de la configuration de la pièce d'ouvrage affichée agrandie (25).

3. Un procédé d'affichage de la configuration d'une pièce d'ouvrage selon la revendication 1 ou la revendication 2, dans lequel une zone contenant l'affichage de la partie agrandie est indiquée sur ladite image réduite (21) de l'affichage d'écran standard à l'intérieur dudit affichage d'écran agrandi (25).
